# EUROPÄISCHE PATENTANMELDUNG

(11) **EP 1 705 446 A1**
(43) Veröffentlichungstag der Anmeldung: **27.09.2006**
(21) Anmeldenummer: 06001929.6
(22) Anmeldetag: 31.01.2006
(51) Int. Cl.: F28D 1/03, B21C 37/15, B23K 11/06

(54) **Rohr für einen Wärmetauscher**

(30) Priorität: 22.03.2005 DE 102005013777
(71) Anmelder: Behr GmbH & Co. KG, 70469 Stuttgart (DE)
(72) Erfinder: Koch, Hans, Dipl.-Ing. (FH), 71229 Leonberg (DE); Pfitzer, Matthias, Dipl.-Ing. (FH), 73779 Deizisau (DE)
(74) Vertreter: Mantel, Berthold Friedrich

(57) **Zusammenfassung**

Die Erfindung betrifft ein Rohr (1), insbesondere ein Flachrohr, für einen Wärmetauscher, das aus mindestens einem umgeformten Blechstreifen gefertigt ist, wobei mindestens eine Rollnaht-Schweißnaht (6) vorgesehen ist, welche zwei Teile des oder der Blechstreifen miteinander verbindet.

## Beschreibung

Die Erfindung betrifft ein Rohr, insbesondere ein Flachrohr, für einen Wärmetauscher gemäß dem Oberbegriff des Anspruches 1.

Die DE 195 10 283 A1 offenbart ein Flachrohr für einen Wärmetauscher mit einer verschweißten Längskante und mit auf den Längsseiten nach innen geprägten Sicken, die aneinanderliegen und mindestens eine längsveriaufende Trennwand bilden, die den Innenraum in Kammern unterteilen, wobei die Sicken an ihren Berührungsstellen verschweißt sind. Zur Herstellung der Flachrohre wird ein Aluminium-Metallstreifen zunächst mit zwei parallel zueinander verlaufenden, nach der gleichen Seite herausgeprägten Längssicken und mit nach derselben Seite wie die Sicken hochgebogenen Längskanten versehen. Dieser Metallstreifen ist auf seiner flachen und nicht mit den vorstehenden Sicken versehenen Unterseite mit einer AISi-Plattierung versehen, um später eine Verlötung mit anderen Teilen nach dem Nocolok-Verfahren durchführen zu können. Der Metallstreifen wird anschließend um seine Mittellinie hochgebogen, so dass seine erste Längskante der zweiten Längskante entgegengerichtet ist. Die auf der Seite der ersten Längskante liegende Sicke legt sich beim weiteren Biegen an die andere Sicke an. Der zur Rohrform gebogene Metallstreifen wird dann an der Linie, an der die Sicken aneinander anliegen, verschweißt, beispielsweise mittels eines induktiven Warmpress-Schweißverfahrens oder altemativ mittels eines Laserschweißverfahrens. Anschließend wird die Längsnaht zwischen den auf Stoß angeordneten Längskanten mit Hilfe einer Rohrschweißmaschine hergestellt. Dieses Herstellungsverfahren ist jedoch nicht für eine schweißtechnische Herstellung von Rohren mit Opferplattierung geeignet.

Ausgehend von diesem Stand der Technik ist es Aufgabe der Erfindung, ein verbessertes Rohr zur Verfügung zu stellen. Diese Aufgabe wird gelöst durch ein Rohr mit den Merkmalen des Anspruchs 1. Vorteilhafte Ausgestaltungen sind Gegenstand der Unteransprüche.

Erfindungsgemäß ist ein Rohr, insbesondere Flachrohr, für einen Wärmetauscher vorgesehen, das aus mindestens einem umgeformten Blechstreifen gefertigt ist, bei dem mindestens eine Rollnaht-Schweißnaht vorgesehen ist, welche zwei Teile des oder der Blechstreifen miteinander verbindet. Hierbei handelt es sich bevorzugt um den Bereich in der Nähe der Längskanten, wofür der Blechstreifen derart umgeformt ist, dass im Verbindungsbereich eine flächige Anlage möglich ist. Durch das Vorsehen einer flächigen Anlage können die Wandstärken der Rohre verringert werden, wodurch Material und somit auch Gewicht eingespart werden kann.

Vorzugsweise ist zumindest auf der Innenseite des Rohres eine Plattierung, insbesondere eine Opfer- oder Schutzplattierung, vorgesehen. Diese ist nicht in Verbindung mit Lot, welches unter anderem nachteilige Effekte, wie eine Beeinträchtigung der Korrosionsbeständigkeit oder eine ungleichmäßige Verteilung mit sich bringt, möglich, auf welches durch das Verschweißen verzichtet werden kann. Dies ermöglicht einen besseren Schutz des Rohres und somit einer deutlich verbesserte Haltbarkeit.

Das Rohr weist bevorzugt mindestens eine Sicke, mindestens einen Steg, mindestens einen Falz, mindestens eine Noppe und/oder Winglets auf. Dabei ist das Rohr bevorzugt auch im Bereich der Sicke, des Stegs, des Falzes oder der Noppe verschweißt, insbesondere mittels Rollnahtschweißens oder ggf. auch mittels Punktschweißens (Noppe). Im Gegensatz zu bekannten Herstellungsverfahren, bei denen im Bereich der Sicken o.ä. ein Verlöten stattfindet, welches erst im Rahmen des Verlötens des gesamten Wärmetauschers erfolgt, erhält man bei einem Verschweißen bereits vor dem Kassettieren die Endgeometrie, so dass das Zusammenbauen erleichtert wird und die Fertigungstoleranzen verringert werden können. Dies trifft beispielsweise auch auf die Bereiche noppenartiger Rohr-Boden-Durchzüge zu.

Im Rohr ist bevorzugt mindestens eine Turbulenzeinlage angeordnet, welche eingelegt sein kann, jedoch bevorzugt angeschweißt ist, insbesondere bevorzugt mittels eines Ftollnaht-Schweißverfahrens.

Die zwei miteinander verbundenen Teile liegen bevorzugt flächig aneinander an. Hierbei handelt es sich bevorzugt um nach außen gebogene Endbereiche entlang den Längskanten des Blechstreifens. Die Endbereiche können jedoch auch beispielsweise im Bereich einer Sicke auf Stoß oder überlappend angeordnet sein und mit der gegenüberliegenden Innenseite des Rohres mittels eines Rollnaht-Schweißverfahrens verschweißt sein.

Alternativ kann auch eine Endkante oder ein Falz an einer Fläche anliegen und in diesem Bereich mittels eines Rollnaht-Schweißverfahrens verschweißt sein. Der Falz bildet hierbei bevorzugt eine Trennwand zwischen zwei Kammern eines Mehrkammer-Flachrohres.

Der Blechstreifen sowie eine gegebenenfalls vorhandene Turbulenzeinlage weisen vorzugsweise eine Dicke von minimal 0,1 mm bis maximal 2,0 mm auf. Das Rohr hat bevorzugt einen hydraulisch gleichwirkenden Durchmesser von maximal 5000 mm², insbesondere von maximal 1000 mm².

Als Materialien für das Rohr sowie gegebenenfalls eingelegten Turbulenzeinlagen kommen bevorzugt Aluminium und Aluminiumlegierungen, Chrom und Chromlegierungen, Kupfer, Kupfer-Aluminium-Legierungen, Kupfer-Nickel-Legierungen, Kupfer-Zinn-Legierungen, Kupfer-Zink-Legierungen, Sonder-Kupferlegierungen, unlegierte Stähle, Baustähle mit bis zu 12% Chrom, ferritische Chromstähle mit über 12% Chrom, ferritisch-austenitische Chrom-Nickel-Molybdän-Stähle, austenitische Crhom-Nickel-Stähle mit Sonderzusätzen, Sonderlegierungen auf Eisenbasis, Magnesium und Magnesium-Chrom-Legierungen, Nickel-Chrom-Molybdän-Legierungen, Nickel-KupferLegierungen, Nickel-Molybdän-Legierungen, Sondemickellegierungen, Zinn und Zinnlegierungen, Tantal und Tantallegierungen, Niob und Nioblegierungen, Titan und Titanlegierungen, Zirkonium und Zirkoniumlegierungen in Frage.

Die verwendeten Plattierungen werden bevorzugt durch unedle Materialien gebildet, so dass sich eine schützende Potentialdifferenz zwischen Oberfläche und Rohr ergibt, wobei die Plattierung nicht notwendigerweise nur innen vorgesehen sein muss.

Im Folgenden wird die Erfindung anhand mehrerer Ausführungsbeispiele unter Bezugnahme auf die Zeichnung im Einzelnen erläutert. Es zeigen:
- Fig. 1: einen schematisch dargestellten Querschnitt eines Flachrohres gemäß dem ersten Ausführungsbeispiel,
- Fig. 2: einen schematisch dargestellten Querschnitt eines Flachrohres gemäß dem zweiten Ausführungsbeispiel,
- Fig. 3: einen schematisch dargestellten Teil eines Querschnitts eines Flachrohres im Bereich der Schweißnaht gemäß dem dritten Ausführungsbeispiel,
- Fig. 4: einen schematisch dargestellten Querschnitt eines Sickenrohres gemäß dem vierten Ausführungsbeispiel,
- Fig. 5: einen schematisch dargestellten Querschnitt eines Sickenrohres gemäß dem fünften Ausführungsbeispiel,
- Fig. 6: einen schematisch dargestellten Querschnitt eines Sickenrohres gemäß dem sechsten Ausführungsbeispiel,
- Fig. 7: einen schematisch dargestellten Querschnitt eines Stegrohres gemäß dem siebten Ausführungsbeispiel,
- Fig.8: einen schematisch dargestellten Querschnitt eines Mehrkammerrohres gemäß dem achten Ausführungsbeispiel,
- Fig. 9: einen schematisch dargestellten Querschnitt eines Flachrohres (B-tube) gemäß dem neunten Ausführungsbeispiel,
- Fig. 10: einen schematisch dargestellten Querschnitt eines Flachrohres (B-tube) gemäß dem zehnten Ausführungsbeispiel,
- Fig. 11: einen schematisch dargestellten Querschnitt eines Flachrohres mit Turbulenzeinlage gemäß dem elften Ausführungsbeispiel,
- Fig. 12: einen schematisch dargestellten Querschnitt eines Flachrohres mit Noppen gemäß dem zwölften Ausführungsbeispiel,
- Fig. 13: einen schematisch dargestellten Querschnitt eines Flachrohres mit mehreren Sicken gemäß dem dreizehnten Ausführungsbeispiel,
- Fig. 14: einen schematisch dargestellten Querschnitt eines Flachrohres mit Wingletprägung gemäß dem vierzehnten Ausführungsbeispiel,
- Fig. 15: einen schematisch dargestellten Querschnitt eines Flachrohres mit flacher Rohrgrundgeometrie, und
- Fig. 16: einen schematisch dargestellten Querschnitt eines Flachrohres mit konvexer Rohrgrundgeometrie.

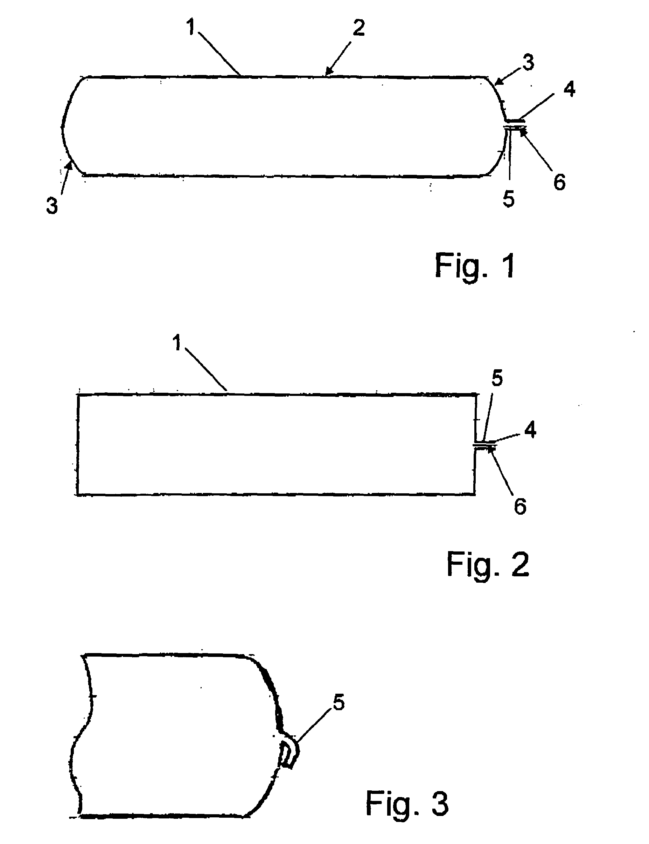

Gemäß dem ersten Ausführungsbeispiel ist ein aus einem einseitig mit einer Opferplattierung versehenen, 0,1 mm bis 2 mm dicken Blechstreifen aus einer Aluminiumlegierung ein Rohr 1, vorliegend ein Flachrohr, gefertigt, welches einen Querschnitt von bis zu 100 mm x 10 mm aufweist. Dieses Flachrohr weist parallel verlaufende, flache Längsseiten 2 und konvex ausgebildete Schmalseiten 3 auf, wobei die Übergänge abgerundet sind und auf der einen Schmalseite 3, in Fig. 1 rechts dargestellt, eine flächige Anlage im Bereich der Längskanten 4 vorgesehen ist. Hierfür ist jeweils ein schmaler Streifen 5 entlang den Längskanten 4 des Blechstreifens etwa in einem rechten Winkel nach außen gebogen, so dass die schmalen Streifen 5 des Blechstreifens mit der ansonsten zum Innenraum des Flachrohres zeigenden Flächen vorliegend eben aneinander anliegen, wobei sie durch eine Schweißnaht 6 fest miteinander verbunden sind. Die schmalen Streifen 5 haben vorliegend eine Breite von bis zu 3 mm.

Die Schweißnaht 6 wurde mittels eines Rollnaht-Schweißverfahrens hergestellt, wofür eine Rolle auf der Oberseite des oberen schmalen Streifens 5 und eine Rolle auf der Unterseite des unteren schmalen Streifens 5 unter Anlegung einer ausreichenden Spannung und eines ausreichenden Anpressdrucks entlanggerollt wird, so dass im Bereich der Anlage der schmalen Streifen 5 ein Überschlag unter Erwärmung der entsprechenden Bereiche und in Folge des Anpressdrucks ein Verschweißen der angeschmolzenen Bereiche unter Bildung der Schweißnaht 6 erfolgt. Dieses Prinzip wird entsprechend auch bei den im Folgenden beschriebenen Ausführungsbeispielen für die Erzeugung einer Rollnaht-Schweißnaht verwendet.

Gemäß dem zweiten Ausführungsbeispiel weist das Rohr 1, wiederum ein Flachrohr, einen rechteckförmigen Querschnitt auf, wobei wiederum an der einen Schmalseite ein schmaler Streifen 5 entlang den Längskanten 4 des Blechstreifens, aus dem das Rohr 1 gefertigt ist, in einem rechten Winkel nach außen gebogen ist, und die schmalen, eben aneinander anliegenden Streifen 5 mittels einer mit einem Rollnaht-Schweißverfahren hergestellten Schweißnaht 6 miteinander verbunden sind. Das Rohr 1 besteht vorliegend aus einer Aluminiumlegierung mit einer Wandstärke von 0,1 bis 2 mm, beispielsweise 1 mm, und einem Querschnitt von bis zu 100 mm x 10 mm, beispielsweise 50 mm x 8 mm. Bei Bedarf kann der Blechstreifen mit einer Schutz- und/oder Lotplattierung versehen sein.

Fig. 3 zeigt ein drittes Ausführungsbeispiel, bei dem die Breite der nach außen vorstehenden schmalen Streifen 5 auf Grund einer relativ großen erforderlichen Kontaktfläche im vorliegenden Anwendungsfall zu groß ist. In diesem Fall erfolgt ein Umbiegen nach dem Verschweißen mittels Rollschweißens. Als Material des Blechstreifens ist vorliegend eine Aluminiumlegierung vorgesehen.

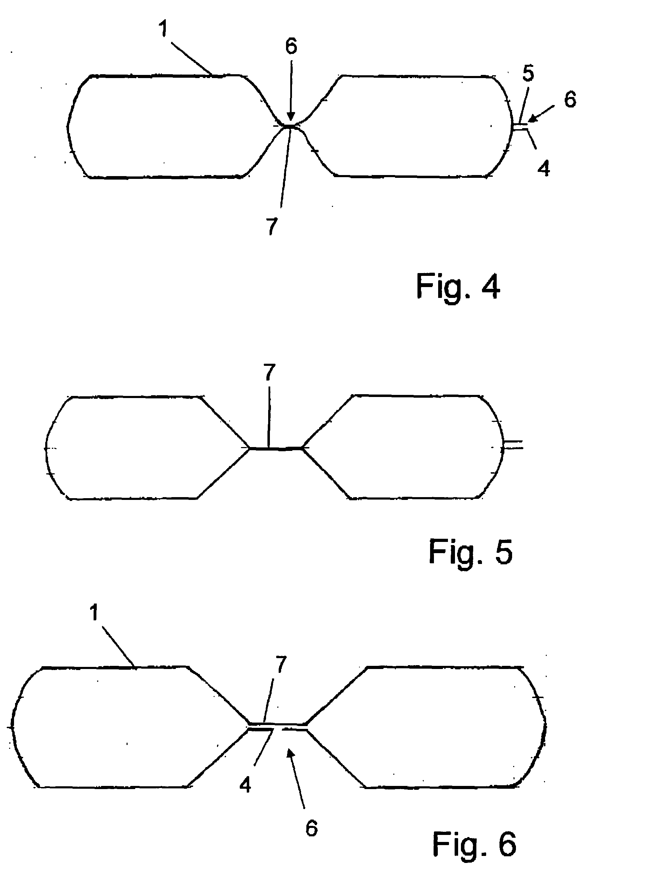

Gemäß dem vierten, in Fig. 4 dargestellten Ausführungsbeispiel ist als Rohr 1 ein Sickenrohr mit einer mittig verlaufenden Sicke 7 vorgesehen. Hierbei sind streifenförmige Bereiche des Blechstreifens, der das Rohr 1 bildet, vorliegend sowohl im Bereich der nach außen vorstehenden schmalen Streifen 5 entlang der Längskanten 4 als auch im Bereich der Sicken 7 miteinander mittels Schweißnähten 6, die nach dem Umformen mittels Rollschweißens hergestellt wurden, verbunden, wobei die Schweißnaht im Bereich der Sicke 7 sehr schmal ausgebildet ist

Gemäß einer nicht in der Zeichnung dargestellten Variante ist auschließlich die Schweißnaht im Bereich der Sicke mittels Rollschweißens hergestellt. Die Längskanten enden auf Stoß und sind auf herkömmliche Weise mittels induktiven Wärmepressschweißens miteinander verschweißt. Alternativ können auch die Längskanten wie beim vierten Ausführungsbeispiel beschrieben verschweißt sein, und die Verschweißung im Bereich der Sicken kann auf beliebige andere Weise erfolgen, bspw. mittels Warmpressschweißens.

Fig. 5 zeigt ein fünftes Ausführungsbeispiel, welches im Wesentlichen dem zuvor beschriebenen vierten Ausführungsbeispiel entspricht, wobei jedoch die Sicken 7 deutlich breiter ausgebildet sind, vorliegend trapezförmig. Auch hier sind wiederum Varianten entsprechend denen des vierten Ausführungsbeispiels möglich.

Gemäß dem sechsten, in Fig. 6 dargestellten Ausführungsbeispiel ist ein Blechstreifen derart zu einem Sickenrohr gebogen, dass sie Längskanten 4 im Bereich der Sicke 7 mittig auf Stoss liegen, so dass das Verschweißen der Sicke 7 und das Schließen des Rohres 1 an einer Stelle und in einem Arbeitsgang mittels Rollnaht-Schirveißens erfolgen kann, wobei die Schweißnaht 6 etwas breiter ausgebildet ist, zumindest sofern die Längskanten 4 auf Stoss liegen und nicht überlappend angeordnet sind, was alternativ möglich ist.

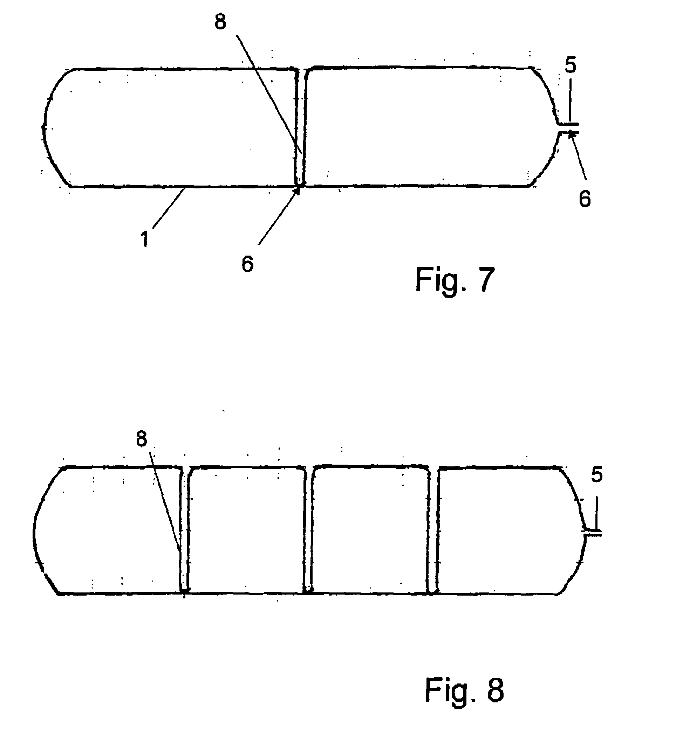

Fig. 7 zeigt ein Stegrohr mit einem Steg. weicher durch einen Falz 8 im Blechstreifen gebildet ist. Der Falz 8 liegt mit seinem Ende auf der anderen Rohrinnenseite an und ist hiermit mittels Rollnahtschweißens unter Bildung einer Schweißnaht 6 verschweißt, wofür eine Rolle auf der Oberseite des Rohres 1 und eine Rolle auf der Unterseite des Rohres 1 unter Anlegung einer ausreichenden Spannung entlanggerollt wird, so dass im Bereich der Anlage ein Überschlag unter Erwärmung der entsprechenden Bereiche und in Folge des Anpressdrucks ein Verschweißen der angeschmolzenen Bereiche erfolgt. Das Verschweißen der schmalen nach außen stehenden Streifen 5 erfolgt auf die zuvor bereits beschriebene Weise.

Entsprechend dem Verschweißen des einen Falzes 8 erfolgt gemäß dem achten, in Fig. 8 dargestellten Ausführungsbeispiel ein Verschweißen von drei Falzen 8 zur Bildung eines Mehrkammerrohres. Das Verschweißen der schmalen nach außen stehenden Streifen 5 erfolgt wiederum auf die zuvor bereits beschriebene Weise.

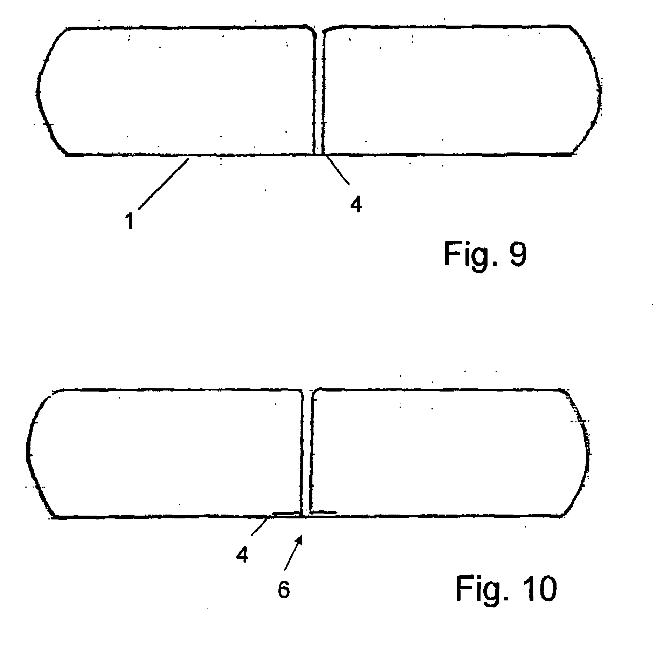

Gemäß dem neunten, in Fig. 9 dargestellten Ausführungsbeispiel ist als Rohr 1 ein sogenanntes B-tube vorgesehen, wobei die beiden Längskanten 4 entsprechend einem Falz angeordnet sind und mit ihren Enden an die untere Rohrinnenseite stoßen. Das Verschweißen erfolgt im Wesentlichen entsprechend dem zuvor beschriebenen Verschweißen der Falze 8, wobei in diesem Fall gfeichzeitig das Rohr 1 geschlossen wird.

Zur Vergrößerung der Anlagefläche der Schweißnaht 6 sind gemäß dem zehnten Ausführungsbeispiel die schmalen Streifen entlang der Längskanten 4 nach außen gebogen, so dass diese an der Rohrinnenseite anliegen. Das Verschweißen erfolgt entsprechend dem Verschweißen der Falze.

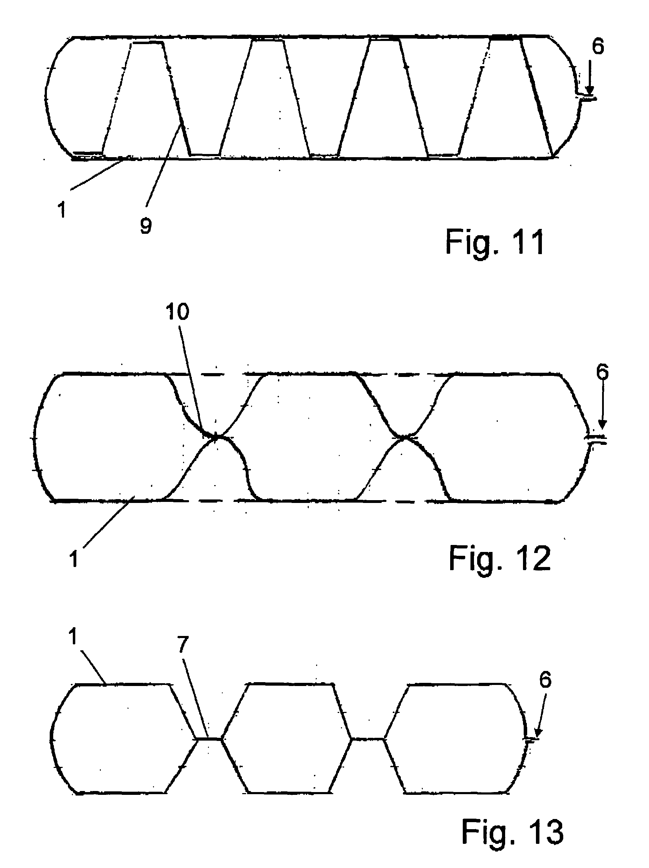

Fig. 11 zeigt als elftes Ausführungsbeispiel ein Flachrohr, weiches dem Flachrohr gemäß dem ersten Ausführungsbeispiel entspricht, in welchem eine Turbulenzeinlage 9, bestehend aus einem umgeformten Blech, eingelegt ist. Die Turbulenzeinlage 9 kann mit dem Flachrohr verschweißt sein, beispielsweise mittels Rollnaht-Schweißens. Der das Rohr 1 bildende umgeformte Blechstreifen ist unter Einlage der Turbulenzeinlage 9 entsprechend dem ersten Ausführungsbeispiel, wiederum auf einer Seite mit einer Schweißnaht 6 verbunden, die mittels Rollnahtschweißens hergestellt wurde.

Gemäß dem zwölften Ausführungsbeispiel ist ein Flachrohr mit eine Mehrzahl von Noppen 10 mit in Richtung der Tiefe gesehen etwa rundem Querschnitt vorgesehen, welche entsprechend den Sicken des vierten Ausführungsbeispiels miteinander verschweißt sind, vorliegend mittels Rollennahtschweißen. Der das Rohr 1 bildende umgeformte Blechstreifen ist, entsprechend dem ersten Ausführungsbeispiel, wiederum auf einer Seite mit einer Schweißnaht 6 verbunden, die mittels Rollnahtschweißens hergestellt wurde.

Fig. 13 zeigt das dreizehnte Ausführungsbeispiel gemäß dem drei in Längsrichtung des Rohres 1 verlaufende Sicken 7 vorgesehen sind, die mittels Rollnahtschweißens miteinander verschweißt sind. Auch in diesem Fall ist der das Rohr 1 bildende umgeformte Blechstreifen, entsprechend dem ersten Ausführungsbeispiel, auf einer Seite mit einer Schweißnaht 6 verbunden, die mittels Rollnahtschweißens hergestellt wurde. Anstelle der drei Sicken 7 können auch zwei oder mehr als drei Sicken vorgesehen sein.

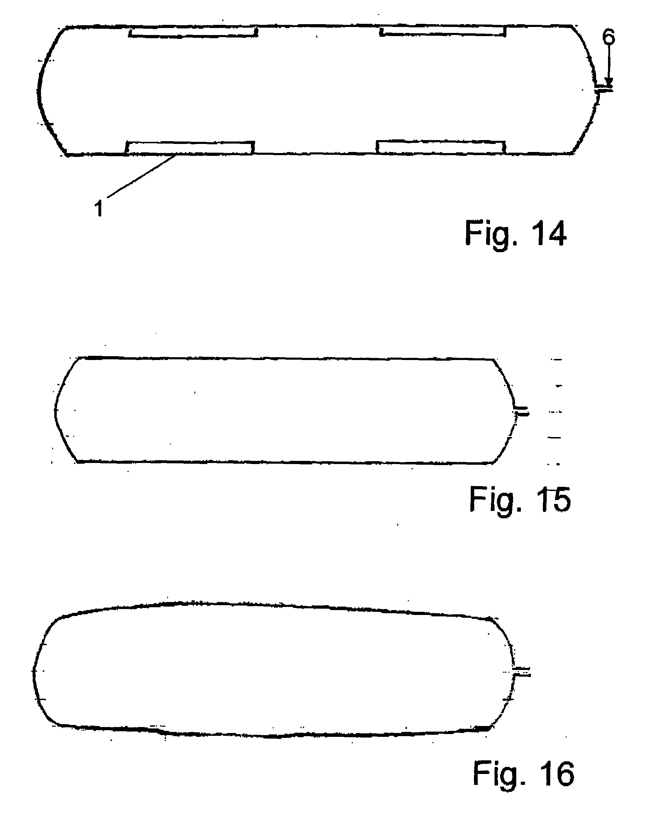

Das in Fig. 14 dargestellte vierzehnte Ausführungsbeispiel betrifft ein als Flachrohr ausgebildetes Rohr 1, welches Wingletprägungen aufweist. Auch in diesem Fall ist der das Rohr 1 bildende umgeformte Blechstreifen, entsprechend dem ersten Ausführungsbeispiel, auf einer Seite mit einer Schweißnaht 6 verbunden, die mittels Rollnahtschweißens hergestellt wurde.

Andere Rohrgeometrien als in den zuvor beschriebenen Ausführungsbeispielen sind ebenfalls möglich, insbesondere Rundrohre oder Ovalrohre oder Rohre mit konvex ausgebildeten Seiten, wie in den Figuren 15 und 16 dargestellt, wobei der Durchmesser der Rundrohre bei einer Wandstärke von maximal 2 mm bevorzugt maximal 80 mm, besonders bevorzugt 5 mm bis 15 mm beträgt.

## Patentansprüche

1. Rohr, insbesondere Flachrohr, für einen Wärmetauscher, das aus mindestens einem umgeformten Blechstreifen gefertigt ist, **dadurch gekennzeichnet, dass** mindestens eine Rolinaht-Schweißnaht (6) vorgesehen ist, welche zwei Teile des oder der Blechstreifen miteinander verbindet.

2. Rohr nach Anspruch 1, **dadurch gekennzeichnet, dass** auf der innen- und/oder Außenseite des Rohres (1) eine Plattierung, insbesondere eine Opfer- oder Schutzplattierung, vorgesehen ist.

3. Rohr nach Anspruch 1 oder 2, **dadurch gekennzeichnet, dass** das Rohr
(1) eine oder mehrere Sicken (7), Stege, Falze (8), Noppen (10) und/oder Winglets aufweist

4. Rohr nach einem der vorhergehenden Ansprüche, **dadurch gekennzeichnet, dass** in dem Rohr (1) mindestens eine Turbulenzeinlage (9) angeordnet ist.

5. Rohr nach einem der vorhergehenden Ansprüche, **dadurch gekennzeichnet, dass** die zwei miteinander verbundenen Teile flächig aneinander anliegen.

6. Rohr nach einem der Ansprüche 1 bis 4, **dadurch gekennzeichnet, dass** die zwei miteinander verbundenen Teile derart aneinander anliegen, dass ein Teil mit einer Endkante oder einem Falz (8) an einer Fläche des anderen Teils anliegt.

7. Rohr nach Anspruch 6, **dadurch gekennzeichnet, dass** der Falz eine Trennwand zwischen zwei Kammern eines Mehrkammer-Flachrohres bildet.

8. Rohr nach einem der vorhergehenden Ansprüche, **dadurch gekennzeichnet, dass** der Blechstreifen sowie eine gegebenenfalls vorhandene Turbulenzeinlage eine Dicke von minimal 0,1 mm bis maximal 2,0 mm aufweisen.

9. Rohr nach einem der vorhergehenden Ansprüche, **dadurch gekennzeichnet, dass** das Rohr (1) einen hydraulisch gleichwirkenden Durchmesser von maximal 5000 mm², insbesondere von maximal 1000 mm², aufweist.

10. Rohr nach einem der vorhergehenden Ansprüche, **dadurch gekennzeichnet, dass** das Rohr (1) aus einem metallischen Werkstoff gefertigt ist, insbesondere aus Aluminium, Edelstahl, Kupfer, einem Buntmetall, Titan, Nickel, Magnesium oder einer Legierung hiervon.

11. Verfahren zur Herstellung eines Rohres (1), insbesondere eines Flachrohres, aus mindestens einem Blechstreifen, vorzugsweise einem plattierten Blechstreifen, der umgeformt wird, **dadurch gekennzeichnet, dass** nach dem Umformen ein Rollnaht-Schweißverfahren verwendet wird.

12. Verfahren nach Anspruch 11, **dadurch gekennzeichnet, dass** die Plattierung auf der nach dem Umformen innen angeordneten Seite des Blechstreifens vorgesehen ist.
